# EUROPEAN PATENT APPLICATION

(11) **EP 0 722 765 A1**
(43) Date of publication of application: **24.07.1996**
(21) Application number: 96300349.6
(22) Date of filing: 17.01.1996
(51) Int. Cl.: B01D 53/047, C07C 7/13, C07C 11/02

(54) **Pressure swing adsorption process for fractionating a multi-component mixture**

(30) Priority: 19.01.1995 US 375435
(71) Applicant: THE BOC GROUP, INC., Murray Hill, New Jersey 07974 (US)
(72) Inventor: Kumar, Ravi, Allentown, Pennsylvania 18103 (US); Stern, Sidney S., Highland Park, New Jersey 08904 (US)
(74) Representative: Wickham, Michael

(57) **Abstract**

A method of rectifying a multi-component mixture by pressure swing adsorption to separate primary and secondary components of the mixture. Two groups of adsorbent beds are used in the method and adsorbent beds of the two groups are employed in a paired relationship and subjected to feed, co-current depressurisation, evacuation, and countercurrent repressurisation stages. In the feed stages, pairs of the adsorbent beds are pressurised with the mixture to adsorb the primary component in a first group of the adsorbent beds and in an entry section of a second group of the adsorbent beds. Also during the feed stage, the secondary component is adsorbed in the second group of adsorbent beds in remaining sections thereof. During co-current depressurisation, any of the secondary component adsorbed in the first group of adsorbent beds and part of the primary component is driven to the second group of adsorbent beds. The adsorbent beds are individually evacuated to produce primary and secondary product streams rich in the primary and secondary components, respectively. Countercurrent repressurisation is effected with a waste stream comprising the effluent from the feed stage. The countercurrent repressurisation stage functions to bring the adsorbent beds back up to operating pressure and to drive the primary component back into the first group of adsorbent beds.

## Description

The present invention relates to a pressure swing adsorption process for fractionating a multi-component gas mixture in which two groups of first and second adsorbent beds are employed to produce product streams enriched in individual components of the multi-component mixture. More particularly, the present invention relates to such a pressure swing adsorption process in which a first group of adsorbent beds contain primary adsorbent preferentially to adsorb a first of the components and a second group of adsorbent beds each have an entry section containing the primary adsorbent and, downstream of the entry section in the direction of flow of the multi-component feed gas mixture be separated, a secondary adsorbent, preferentially to adsorb a second of the components. Even more particularly, the present invention relates to such a pressure swing adsorption process that is conducted in accordance with a cycle in which the first component adsorbed within the adsorbent contained within the entry section of the second group of adsorbent beds flows back to the first group of adsorbent beds in order to increase recovery of the first component.

Pressure swing adsorption systems that utilise groups of adsorbent beds to fractionate a multi-component mixture are known. An example can be found in US 4,790,858, in which a multi-component gas mixture containing hydrogen as a primary component, a secondary component and a minor quantity of one or more other components is separated by adsorption in three groups of adsorbent beds to produce a purified hydrogen product. The secondary component, which consists of carbon dioxide, is adsorbed in a first group of adsorbent beds and the other components ("the minor components") are adsorbed in a second group of adsorbent beds. This permits the recovery of unadsorbed high purity hydrogen. The adsorbent beds of the second group are thereafter depressurised and purged with the high purity hydrogen to produce an effluent containing the hydrogen and desorbed minor components. The effluent is passed through the third group of adsorbent beds that are designed preferentially to adsorb the minor components to produce a further amount of the high purity hydrogen. In a preferred embodiment, the second group of adsorbent beds have entry sections provided with an adsorbent preferentially able to adsorb any secondary component not adsorbed in the first group of adsorbent beds. During a countercurrent desorption stage, the second group of adsorbent beds is depressurised so that the secondary component previously adsorbed in the entry section of the second group of adsorbent beds is introduced into the first group of adsorbent beds in a direction co-current to the initial feed to adsorb more of the secondary component within the first adsorbent bed.

As will be discussed, the present invention provides a process for fractionating a multi-component mixture to produce a primary component at high purity and which utilises two groups of adsorbent beds. The two groups of adsorbent beds are operated in accordance with the cycle to produce the primary component at higher recovery rates than known processes utilising groups of adsorbent beds for such purposes.

In accordance with the process, first and second adsorbent beds, in a paired relationship, are subjected to a continuous cycle having sequential feed, co-current depressurisation, evacuation, and countercurrent repressurisation stages. The first and second adsorbent beds have opposed entry and discharge sections through which the multi-component mixture passes into and is discharged from the first and second adsorbent beds. The first adsorbent beds contain a first or primary adsorbent selected preferentially to adsorb a primary component of the multi-component mixture and the second adsorbent beds contain the first adsorbent in the entry sections thereof and a second or secondary adsorbent selected preferentially to adsorb the secondary component. The second adsorbent is located downstream of the entry sections.

The feed stages are conducted by feeding the first and second adsorbent beds with the multi-component mixture so that the primary component adsorbs within the first adsorbent and the secondary component adsorbs within the second adsorbent and to a lesser extent adsorbs within the first adsorbent to produce a waste stream discharged from the discharge sections of the second adsorbent beds.

The co-current depressurisation stages are effected by depressurising the first adsorbent beds through the second adsorbent beds to cause the secondary component to flow from the first adsorbent contained within the first adsorbent beds to the second adsorbent beds and also, thereby causing part of the primary component adsorbed within the first adsorbent of the first adsorbent beds to enter the entry sections of the second adsorbent beds. The evacuation stages are conducted by evacuating each of the first and second adsorbent beds to produce a primary product stream enriched in the primary product and a secondary product stream enriched in the secondary component, respectively.

In the countercurrent repressurisation stages, the first and second adsorbent beds are countercurrently repressurised with the waste stream. As a result, the first and second adsorbent beds pressurise. The primary and secondary components contained within the waste stream adsorb in the second and first adsorbents. Additionally, repressurisation drives the primary component, previously adsorbed within the first adsorbent contained within the entry section of the second adsorbent beds, back to the first adsorbent contained within the first adsorbent beds.

As stated above, the method is conducted by subjecting first and second adsorbent beds in a paired relationship. The term "paired relationship" as used herein means that pairs of first and second adsorbent beds are subjected to each of the stages of the cycle. The same pairs are not necessarily subjected to each stage of the cycle, and different pair of adsorbent beds may be subjected to different stages of the cycle. For instance, the pairs of adsorbent beds that are connected in a feed stage may not be the same pairs of adsorbent beds that are connected in a co-current depressurisation stage. Additionally the term "co-current" as used herein means a direction taken from an entry to discharge section and the term "countercurrent" as used herein and in the claims means a direction taken from a discharge to an entry section, i.e. the reverse of "co-current".

The present invention operates to separate the primary component and to produce a product stream containing the primary component at a high purity. This is accomplished by the sequence of feeding the adsorbent beds so that part of the primary component not adsorbed within the first adsorbent bed is caught in the entry section of the second adsorbent bed and then subjecting the adsorbent beds to co-current depressurisation to drive or cause the flow of any of the secondary component adsorbed within the first group of adsorbent beds into the second group of adsorbent beds while, again, catching any of the primary component that desorbs from the first group of adsorbent beds in the entry sections of the second group of adsorbent beds. These two operations increase the purity of the product stream that is formed by evacuation of the first group of adsorbent beds. The potentially valuable primary component that has adsorbed within the entry sections of the second group of adsorbent beds is recovered in the adsorbent of the first group of adsorbent beds during countercurrent repressurisation to produce the primary component in the product stream at high recovery rates.

The invention also provides a pressure swing adsorption process for fractionating a feed comprising a multi-component gas mixture, the process employing a first group of first adsorbent beds in parallel with one another, and a second group of second adsorbent beds in parallel with one another but each able selectively to be placed in series communication with a selected first adsorbent bed, wherein each first adsorbent bed comprises a primary adsorbent which preferentially adsorbs a primary component of the multi-component gas mixture, and each second adsorbent bed contains a first layer of the primary adsorbent and a second layer of a secondary adsorbent which preferentially adsorbs a secondary component of the multi-component gas mixture, the second layer being, in the direction of flow of the feed, downstream of the first layer, and the process comprising operating the first and second adsorbent beds so as to perform a continuous cycle having sequential feed, cocurrent depressurisation, evacuation and countercurrent repressurisation stages, wherein in each cycle:
a) the feed stage comprises causing said feed to flow through a selected one of the first adsorbent beds and from there a selected one of the second adsorbent beds so that said primary component is selectively adsorbed by said primary adsorbent and said secondary component is selectively adsorbed by said secondary adsorbent, the primary adsorbent also adsorbing some of the secondary component, and discharging from the second layer of the selected second adsorbent bed a waste gas depleted of said primary and secondary components;
b) the cocurrent depressurisation stage comprises depressurising the said selected first adsorbent bed by placing it in series communication with a chosen one of the second adsorbent beds, whereby gas flows in the same direction as in each feed stage from the first adsorbent bed to into the second adsorbent bed, primary component and secondary component desorbed by the first bed being adsorbed in the first layer and second layer respectively.
c) the said evacuation stage comprises evacuating the said selected first adsorbent bed to produce a primary product stream enriched in said primary component;
d) the said countercurrent repressurisation stage comprises repressurising the said selected one of the secondary beds and the selected primary bed by causing waste gas generated in a feed stage to flow through the second layer and then the first layer of the selected second adsorbent bed and then through the selected first adsorbent bed in a direction countercurrent to the flow therethrough in each feed stage, whereby the primary and secondary components in the waste gas are readsorbed and primary component held by the first layer of the selected second adsorbent bed at the start of the countercurrent repressurisation stage is displaced therefrom and caused to flow into the selected first adsorbent bed;
   and wherein a secondary product generation stage is performed after the completion of the said feed stage and before the start of the said countercurrent depressurisation stage, the secondary product generation step comprising evacuating the said selected one of the second adsorbent beds so as to produce a secondary product stream enriched in said secondary component.

The invention will now be described by way of example with reference to the accompanying drawings, in which:
Figure 1 is a schematic view of an apparatus for carrying out a method in accordance with the present invention;
Figure 2 is a chart identifying the stages that are performed in operation of the apparatus according to Figure 1;
Figure 3 is another chart identifying alternative sequences of stages from those shown in Figure 2;
Figure 4 is a further chart identifying other alternative sequences of stages from those shown in Figure 2;
Figure 5 is a yet further chart identifying further alternative sequences of stages from those shown in Figure 2.

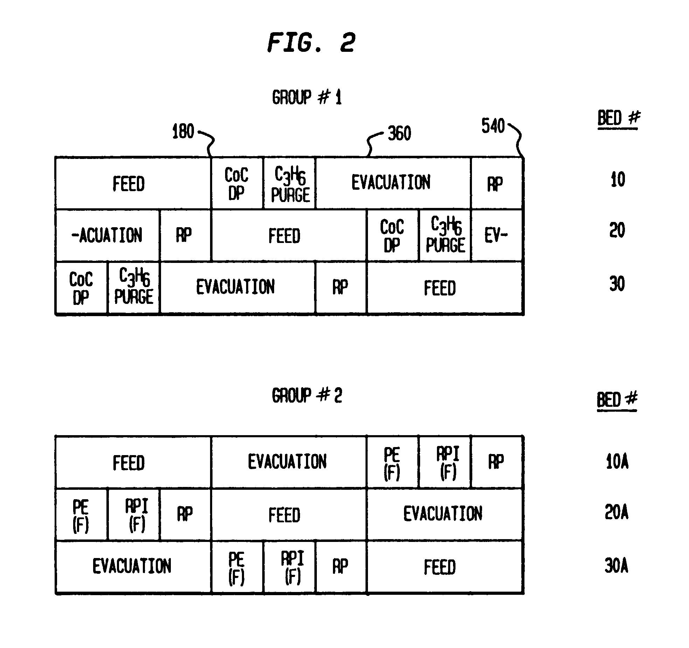

In each of Figures 2-5, the duration of each stage illustrated by a square is 60 seconds and each stage illustrated by a rectangle has a duration of 180 seconds.

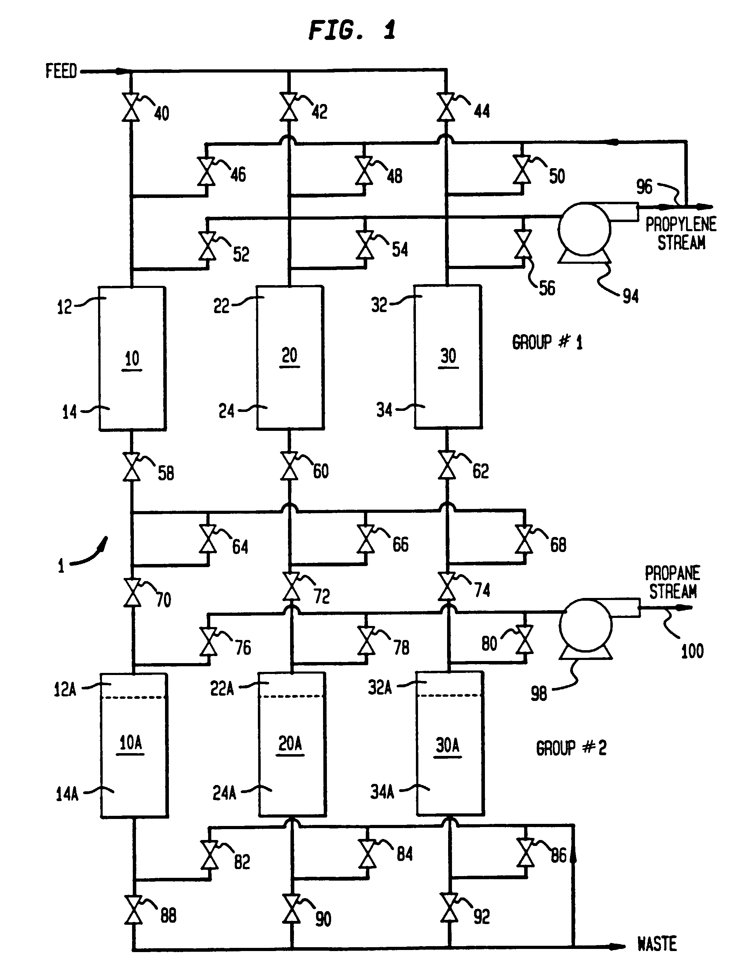

With reference to Figure 1, an apparatus 1 consists of two groups of adsorbent beds acting in concert to fractionate a multi-component gas mixture comprising hydrogen, propylene, and propane and to produce primary and secondary product streams. The primary product stream is a high purity propylene stream and the secondary product stream is a propane stream of lower purity than the high purity primary product stream. It is understood however, that the present invention has equal applicability to the fractionation of other multi-component mixtures.

The first group of adsorbent beds, namely first adsorbent beds 10, 20, and 30 contain a first or primary adsorbent which preferentially adsorbs propylene over the other components of the multi-component mixture. A suitable adsorbent for this task is Zeolite 4A. The first adsorbent beds 10, 20 and 30 are provided with entry sections or ends 12, 22 and 32, respectively, and discharge sections or ends, 14, 24 and 34, respectively. The second group of adsorbent beds, namely, second adsorbent beds 10A, 20A, and 30A are provided with entry sections or ends 12A, 22A and 32A, respectively, and discharge sections or ends 14A, 24A, and 34A, respectively. Entry sections 12A, 22A, and 32A of respective second adsorbent beds 10A, 20A and 30A contain a layer of the same first or primary adsorbent as that within first adsorbent beds 10, 20, and 30. The remaining portions of second adsorbent beds 10A, 20A, and 30A (situated directly in the direction of flow of feed downstream of entry sections 12A, 22A, and 32A) contain a layer of a second adsorbent preferentially to adsorb propane over the other components of the multi-component mixture. A suitable adsorbent for such purpose is SG or Zeolite 13X. In the Figures the dashed lines indicate the division of adsorbent beds 10A, 20A, and 30A into the two layers.

The flow throughout apparatus 1 is controlled by remotely actuated on-off valves referenced in the valve sequence chart set forth below. Although not illustrated, operational control of on-off valves referenced in the valve sequence chart set forth below can be effected by a digital control system of a kind known in the art.

With additional reference to Figure 2 and the following valve sequence chart, a sequence of operation for apparatus 1 is illustrated. It is to be noted that in the value sequence chart, the symbol "0" indicates that a valve is in an open position. Valves that are not open are each in a closed position.

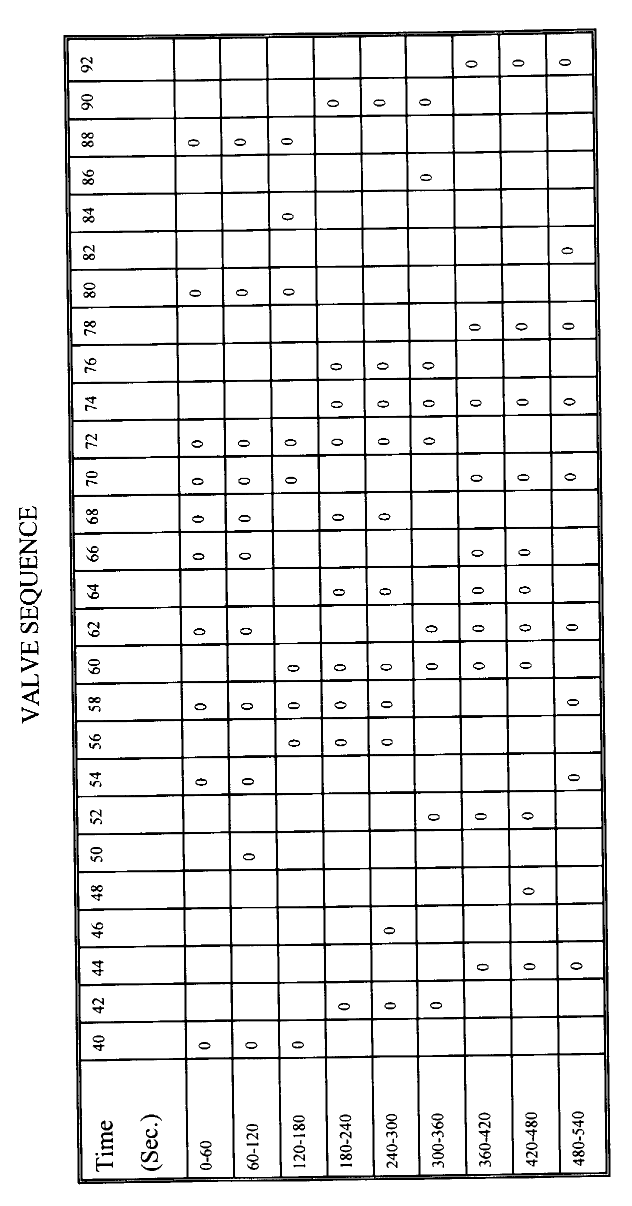

During the first time interval (0-60 seconds) valves 40, 58, 70 and 88 are open. In this configuration of apparatus 1, first and second adsorbent beds 10 and 10A are subjected to a feed stage designated in Figure 2 as "FEED". In the feed stage, the particular bed involved is fed with the multi-component mixture at pressure. To this end, first and second adsorbent beds 10 and 10A are connected in series so that the multi-component mixture feeds the first adsorbent bed 10 (where propylene and to a lesser extent propane are adsorbed) and then entry section 12A of second adsorbent bed 10A where any propylene not adsorbed in first adsorbent bed 10 is adsorbed. Propane is adsorbed in the remainder of second adsorbent bed 10A to produce a waste stream comprising hydrogen which is discharged from second adsorbent bed 10A. During this first time interval, valve 54 is open while valve 60 is closed. A vacuum pump 94 subjects first adsorbent bed 20 to sub-atmosphere pressure in "Evacuation Stage" (see Figure 2) to produce a propylene product stream 96.

In the first 0-60 second time interval, valves 62, 68, 66 and 72 are open while valves 90 and 84 are closed. This subjects first and second adsorbent beds 30 and 20A to a co-current depressurisation stage ("CoCDP") for bed 30 and a pressurisation stage ("PE(F)") for bed 20 A. Prior to the pressurisation stage the bed 20A was subjected to an evacuation stage and bed 30 to a feed stage. As such, the resultant low pressure of second bed 20A causes gas to flow from the discharge end of bed 30 into the feed end 12 of the bed 20A. Thus there is a pressure equalisation between the beds. The co-current depressurisation stage causes any of the secondary component (propane) adsorbed within the first adsorbent bed 30 and part of the primary component (propylene) to desorb from first adsorbent bed 30 and to flow into the second adsorbent bed 20A. The desorbed propylene is adsorbed within entry section 22A of second adsorbent bed 20A and the desorbed propane is adsorbed within the remainder of second adsorbent bed 20A. As mentioned above, this action increases the purity of propylene adsorbed within first adsorbent bed 30.

During this first sixty second time interval of operation, valves 86 and 92 are in closed positions while valve 80 is in an open position. This allows an evacuation of second adsorbent bed 30A by means of vacuum pump 98 to produce a secondary product stream 100 enriched in propane.

In the next time interval, 60 to 120 seconds, first adsorbent beds 10 and 10A are still being subjected to the feed stage and adsorbent beds 20 and 30A are undergoing the evacuation stage to produce product streams. As indicated in the valve sequence chart, valve 50 is open to cause part of the primary product stream 96 to flow into first adsorbent bed 30 to increase the propylene purity of adsorbent bed 30. This stage of the process is known as a product purge stage and is designated in Figure 2 as "C₃ H₆ Purge". At the same time, second adsorbent bed 20A is being subjected to an initial cocurrent repressurisation with the effluent from first adsorbent bed 30, again adsorbing any unadsorbed propylene within entry section or layer 22A. The layer of secondary adsorbent in the bed 20A is adsorbing any propane being desorbed from first adsorbent bed 30. Since adsorbent bed 20A is being subjected to an initial cocurrent repressurisation it is given the notation "RPI (F)" for this stage of the cycle.

In the subsequent time interval, 120 to 180 seconds, first and second adsorbent beds 10 and 10A are still being subjected to the feed stage. First adsorbent bed 20 and second adsorbent bed 20A are now being subjected to a countercurrent repressurisation stage with part of the waste stream. Valves 84, 72 and 60 are open for such purpose. The countercurrent repressurisation stage causes propylene adsorbed within entry section 22A to flow back to first adsorbent bed 20 and to be adsorbed within the first adsorbent contained within first adsorbent bed 20. Valve 56 is open to allow first adsorbent bed 30 to be subjected to an evacuation stage by vacuum pump 94. Second adsorbent bed 30A continues to be subjected to the evacuation stage

During the succeeding time interval of 180 to 240 seconds, first adsorbent bed 10 is paired with second adsorbent bed 30A to undergo a co-current depressurisation stage. First and second adsorbent beds 20 and 20A continue to be paired but now in the feed stage of the process and first and second adsorbent beds 30 and 10A are being evacuated by vacuum pumps 94 and 98 to subject each of them to the evacuation stage.

In the 240 to 300 second interval, first and second adsorbent beds 10 and 30A remain paired to undergo a product purge stage with propylene. Adsorbent beds 20 and 20A continue to be subjected to the feed stage and each of adsorbent beds 30 and 10A continue to be subjected to evacuation.

During the next sixty second time interval, 300 to 360 seconds, first and second adsorbent beds 10 and 10A are now the producing pair of adsorbent beds and are subjected to the evacuation stage by vacuum pumps 94 and 98, respectively, to produce product streams rich in propylene and propane, respectively. First and second adsorbent beds 20 and 20A continue to be fed, while second and first adsorbent beds 30A and 30 are subjected to the countercurrent repressurisation stage by use of a part of the waste stream.

At the next part of the cycle, from 360 to 420 seconds, first adsorbent bed 10 continues to be a producing adsorbent bed, while second adsorbent bed 20A now becomes a producing adsorbent bed. As such, first and second adsorbent beds 10 and 20A are subjected to evacuation. At the same time, first and second adsorbent beds 20 and 10A are subjected to the co-current depressurisation and cocurrent repressurisation stages, respectively while first and second adsorbent beds 30 and 30A are paired for the feed stage.

After the elapse of the next minute of the cycle, 420 to 480 seconds, first and second adsorbent beds 10 and 20A continue to be subjected to evacuation. First and second adsorbent beds 20 and 10A are subjected to the purge stage and cocurrent repressurisation (with purge gas) stage, respectively, and first and second adsorbent beds 30 and 30A continue to be subjected to the feed stage.

During the final time period of between 480 and 540 seconds, first and second adsorbent beds 10 and 10A are repressurised with a portion of the waste stream and are thus subjected to the countercurrent repressurisation stage. First and second adsorbent beds 20 and 20A are paired and subjected to the evacuation stage, while first and second adsorbent beds 30 and 30A continue to be subjected to the feed stage.

After the elapse of 540 seconds, the cycle repeats itself. As can be seen, each of the first adsorbent beds is paired with a second adsorbent bed and subjected to the feed, co-current depressurisation, product purge, evacuation, and counter-current repressurisation stages. As is evident from the above discussion a pair of first and second adsorbent beds (10 and 10A; 20 and 20A; 30 and 30A) are subjected to the countercurrent repressurisation and then the feed stages of the cycle. While a first pair of the first and second adsorbent beds is subjected to the feed stage, second and third pairs of the first and second adsorbent beds are subjected to the evacuation and co-current depressurisation/cocurrent repressurisation stages. For instance, first and second adsorbent beds 10 and 10A are subjected to the feed stage, while first and second adsorbent beds 30 and 20A are subjected to co-current depressurisation/cocurrent repressurisation and first and second adsorbent beds 20 and 30A are subjected to evacuation. Thereafter first and second adsorbent beds 30 and 20A are also subjected to the product purge/ cocurrent repressurisation stage with part of the primary product stream highly enriched in propylene.

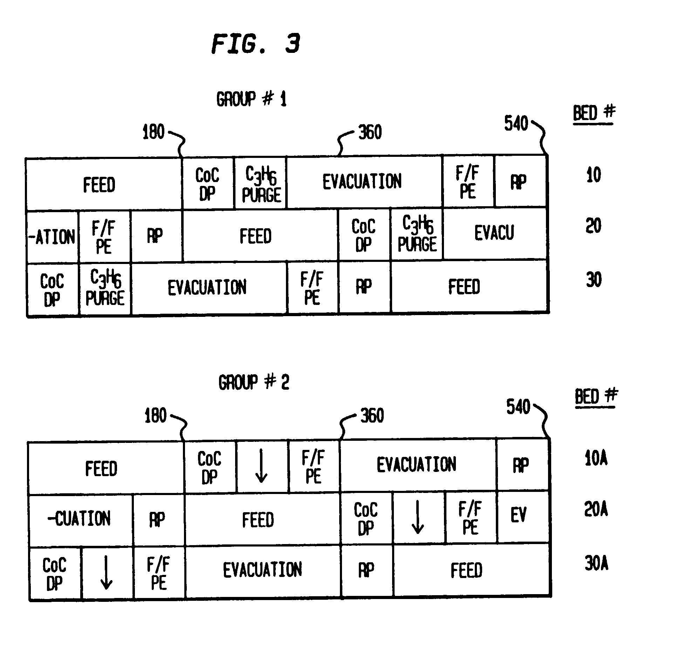

With reference to Figure 3, an alternative embodiment is illustrated in which the adsorbent beds 10, 20 and 30 cycle within feed, co-current depressurisation, product purge, evacuation, pressure equalisation, and countercurrent repressurisation stages. This is distinguished from the foregoing cycle by the addition of a feed end to feed end pressure equalisation stage designated in Figure 3 as "F/F PE". For instance, at time period 420 to 480 seconds, first and second adsorbent beds 10 and 20A are paired, entry section 12 to entry section 22A, and are pressure equalised. (Appropriate pipelines and valves are provided to enable this step to be performed.) Just prior to this stage, adsorbent bed 10 is subjected to the evacuation stage and is therefore at low pressure and adsorbent bed 20A has either been pressurised with waste or has been idle after having been subjected to co-current depressurisation from the higher pressure adsorbent bed. The possible alternate stages are designated in Figure 3 as "↓". The effect of the pressure equalisation stage is to cause propylene adsorbed in entry section 22A of adsorbent bed 20A to flow back to adsorbent bed 10 for adsorption. Alternatively, although not illustrated, second adsorbent bed 20A could be paired with first adsorbent bed 20 for a product purge stage or be repressurised with waste. In case of repressurisation, the effluent from first adsorbent bed 20 undergoing the product purge stage would also go to waste. Further, rather than having a cocurrent depressurisation stage in which gas flows from a first bed initially at a higher pressure to a second bed initially at a lower pressure in which the gas is retained, the two beds are initially at the same (relatively high) pressure, the second bed is placed in communication with a vent pipeline (not shown) at the end opposite its feed end, and as a result there is flow of gas from the second bed out of the apparatus and flow of gas from the first bed into the second bed. Thus, both beds undergo cocurrent depressurisation.

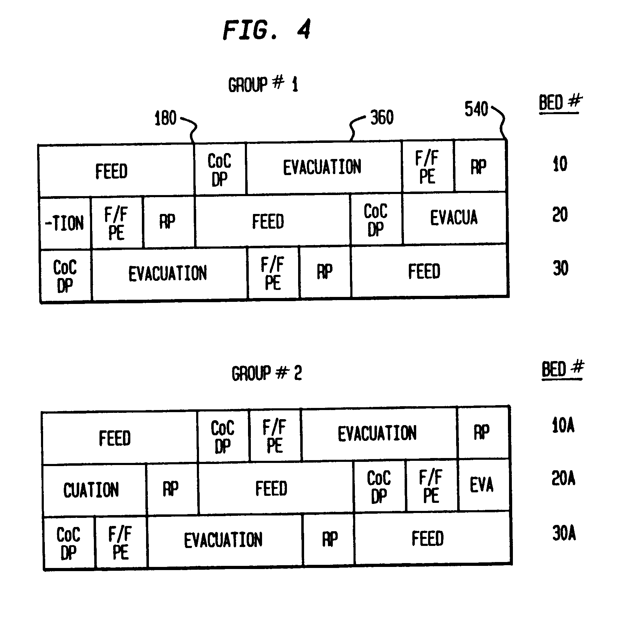

With reference to Figure 4, a still further embodiment of a method in accordance with the present invention is illustrated. This embodiment does not incorporate a product purge stage but does have a feed end to feed end pressure equalisation stage. As illustrated, each of the first adsorbent beds is subjected to a feed stage, a co-current depressurisation stage, an evacuation stage, a feed end to feed end pressure equalisation stage and then a countercurrent repressurisation stage with waste as is each of the second adsorbent beds. For instance, adsorbent beds 10 and 10A are subjected to the feed stage while adsorbent beds 20 and 20A are being evacuated, and first and second adsorbent beds 30 and 30A undergo co-current depressurisation. In the next time interval, first and second adsorbent beds 20 and 30A are connected feed end to feed end and are pressure equalised to discharge propylene from entry section 32A of second adsorbent bed 30A to first adsorbent bed 20. Thereafter, first and second adsorbent beds 20 and 20A are repressurised with a portion of the waste stream. At the same time, second adsorbent bed 30A is evacuated to produce a propane rich product stream.

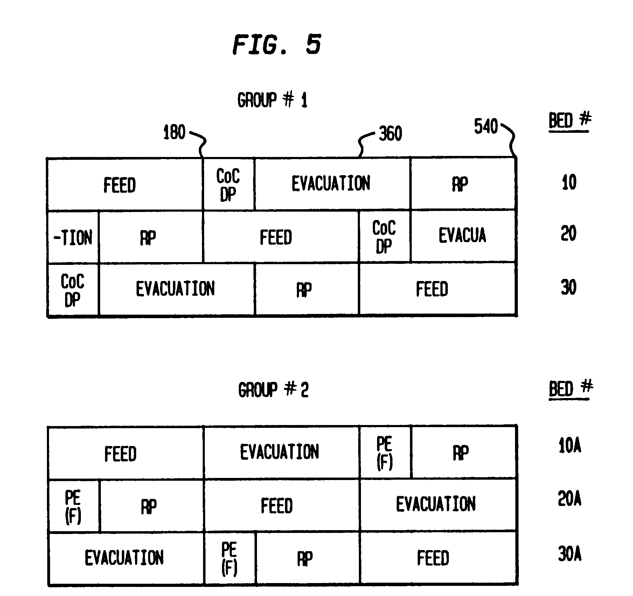

With reference to Figure 5, a still further embodiment is illustrated which differs from the aforementioned embodiment in that it does not have a feed end to feed end pressure equalisation stage. Thus, each adsorbent bed is subjected to feed, co-current depressurisation, evacuation and countercurrent repressurisation stages. For instance, first adsorbent bed 10 undergoes a feed stage and then undergoes a co-current depressurisation stage by being placed in communication with second adsorbent bed 30A. The second adsorbent bed is initially at a lower pressure than the first bed and the operation of this stage is analogous to the cocurrent depressurisation stage described hereinabove with reference to Figure 2. Thereafter first adsorbent bed 10 undergoes an evacuation stage to produce the primary product. At the conclusion of the evacuation stage, first adsorbent bed 10 undergoes a countercurrent repressurisation stage. In this stage waste gas (from second adsorbent bed 30A) is fed back to second adsorbent bed 10A and then back to first adsorbent bed 10 in a direction countercurrent to the feed direction.

While the invention has been discussed with reference to a preferred embodiment, as will be understood by those skilled in the art, numerous changes, omissions and additions can be made without departing from the present invention. For example, some of the waste gas may be collected as a third product.

## Claims

1. A pressure swing adsorption process for fractionating a multi-component gas mixture, said process comprising:
subjecting first and second adsorbent beds in a paired relationship to a continuous cycle having sequential feed, co-current depressurisation, evacuation, and countercurrent repressurisation stages;
said first and second adsorbent beds having opposed entry and discharge sections through which said multi-component mixture passes into and is discharged from said first and second adsorbent beds, said first adsorbent beds containing a first adsorbent selected preferentially to adsorb a primary component of said multi-component mixture and said second adsorbent beds containing said first adsorbent in said entry sections thereof and a second adsorbent, selected preferentially to adsorb a secondary component of said multi-component mixture, said second adsorbent located downstream from said entry sections;
said feed stage being conducted by feeding said first and second adsorbent beds with said multi-component mixture so that said primary component is adsorbed within said first adsorbent and said secondary component is adsorbed within said second adsorbent and to a lesser extent is adsorbed within said first adsorbent to produce a waste stream discharged from said discharge sections of said second adsorbent beds;
said co-current depressurisation stages being conducted by depressurising said first adsorbent beds through said second adsorbent beds to drive said secondary component from said first adsorbent contained within said first adsorbent beds to said second adsorbent beds and also, thereby driving part of the primary component adsorbed within said first adsorbent of said first adsorbent bed to said first adsorbent contained within said entry sections of said second adsorbent beds;
said evacuation stages being conducted by evacuating each of said first and second adsorbent beds to produce a primary product stream enriched in said primary component and a secondary product stream enriched in said secondary component, respectively; and
said countercurrent repressurisation stages being conducted by countercurrently repressurising said first and second adsorbent beds with said waste stream so that said first and second adsorbent beds are repressurised, a concentration of primary and secondary components contained within said waste stream are adsorbed in said second and first adsorbents, and said primary component contained within said first adsorbent of said entry sections of said second adsorbent beds is driven back to said first adsorbent contained within said first adsorbent beds.

2. A method as claimed in claim 1, further comprising a purge stage situated between said co-current depressurisation stage and said evacuation stage, said purge stage comprising introducing a subsidiary product stream formed from part of said primary product stream into each pair of first and second adsorbent beds, after having just undergone the feed stage, to increase amount of adsorption of said primary component by said first adsorbent.

3. A method as claimed in claim 1, wherein after each of said first adsorbent beds is subjected to said evacuation stage, each of said first adsorbent beds is also subjected to a pressure equalisation stage with a said second adsorbent bed which has just completed said co-current depressurisation stage so that each of said first adsorbent beds is connected to the said second adsorbent bed by its said entry section and said primary component adsorbed within said first adsorbent contained within said entry section of the said second adsorbent bed is driven into said first adsorbent contained within said first adsorbent bed.

4. A method as claimed in claim 1, wherein said co-current depressurisation stage is conducted by depressurising each of said first adsorbent beds through a said second adsorbent bed that has just been evacuated.

5. A method as claimed in claim 2, further comprising subjecting each of said first adsorbent beds to a pressure equalisation stage after said evacuation stage by pressure equalising each of said first adsorbent beds with a said second adsorbent bed just prior to subjugation of said second adsorbent bed to said evacuation stage.

6. A method as claimed in claim 2, wherein:
a first pair of first and second adsorbent beds is subjected to said countercurrent repressurisation and then said feed stages;
while said first pair of first and second adsorbent beds is subjected to said feed stage, second and third pairs of said first and second adsorbent beds are subjected to said evacuation and co-current depressurisation stages; and
after completion of said co-current depressurisation stage and while said first and second adsorbent beds are subjected to said feed and evacuation stages, said third pair of first and second adsorbent beds are subjected to said purge stage.

7. A method as claimed in any one of the preceding claims, wherein said multi-component mixture comprises hydrogen, propylene and propane, said primary component comprises propylene and said secondary component comprises propane.

8. A pressure swing adsorption process for fractionating a feed comprising a multi-component gas mixture, the process employing a first group of first adsorbent beds in parallel with one another, and a second group of second adsorbent beds in parallel with one another but each able selectively to be placed in series communication with a selected first adsorbent bed, wherein each first adsorbent bed comprises a primary adsorbent which preferentially adsorbs a primary component of the multi-component gas mixture, and each second adsorbent bed contains a first layer of the primary adsorbent and a second layer of a secondary adsorbent which preferentially adsorbs a secondary component of the multi-component gas mixture, the second layer being, in the direction of flow of the feed, downstream of the first layer, and the process comprising operating the first and second adsorbent beds so as to perform a continuous cycle having sequential feed, cocurrent depressurisation, evacuation and countercurrent repressurisation stages, wherein in each cycle:
a) the feed stage comprises causing said feed to flow through a selected one of the first adsorbent beds and from there a selected one of the second adsorbent beds so that said primary component is selectively adsorbed by said primary adsorbent and said secondary component is selectively adsorbed by said secondary adsorbent, the primary adsorbent also adsorbing some of the secondary component, and discharging from the second layer of the selected second adsorbent bed a waste gas depleted of said primary and secondary components;
b) the cocurrent depressurisation stage comprises depressurising the said selected first adsorbent bed by placing it in series communication with a chosen one of the second adsorbent beds, whereby gas flows in the same direction as in each feed stage from the first adsorbent bed to into the second adsorbent bed, primary component and secondary component desorbed by the first bed being adsorbed in the first layer and second layer respectively.
c) the said evacuation stage comprises evacuating the said selected first adsorbent bed to produce a primary product stream enriched in said primary component;
d) the said countercurrent repressurisation stage comprises repressurising the said selected one of the secondary beds and the selected primary bed by causing waste gas generated in a feed stage to flow through the second layer and then the first layer of the selected second adsorbent bed and then through the selected first adsorbent bed in a direction countercurrent to the flow therethrough in each feed stage, whereby the primary and secondary components in the waste gas are readsorbed and primary component held by the first layer of the selected second adsorbent bed at the start of the countercurrent repressurisation stage is displaced therefrom and caused to flow into the selected first adsorbent bed;
and wherein a secondary product generation stage is performed after the completion of the said feed stage and before the start of the said countercurrent depressurisation stage, the secondary product generation step comprising evacuating the said selected one of the second adsorbent beds so as to produce a secondary product stream enriched in said secondary component.

9. A method as claimed in claim 8, wherein the first group and the second group both comprise three adsorbent beds, whereby in any given period of time three of the cycles are being performed out of phase with one another.

10. A method as claimed in claim 8 or claim 9, wherein in the said cocurrent depressurisation stage the said selected first adsorbent bed is at least initially at a higher pressure than the chosen second adsorbent bed with which it is placed in series communication, the chosen second adsorbent bed being a different one from that selected in the said feed stage.

11. A method as claimed in claim 8 or claim 9, wherein in the said cocurrent depressurisation stage, the said selected first adsorbent bed is initially at the same superatmospheric pressure as the chosen second adsorbent bed, the chosen second adsorbent bed being the same one as selected in the said feed stage, and gas is vented from the end of the second adsorbent bed remote from the first layer, thereby causing gas to flow from the first adsorbent bed into the second adsorbent bed.

12. A method as claimed in any one of claims 8 to 11, wherein each cycle additionally includes between its cocurrent depressurisation stage and its evacuation stage, a stage of purging the selected first adsorbent bed from its feed end with a stream of the primary product, the resulting purge gas flowing out of the first adsorbent bed into the same second adsorbent bed into which gas flows in the said cocurrent depressurisation stage.
